# EUROPEAN PATENT APPLICATION

(11) **EP 3 082 029 A1**
(43) Date of publication of application: **19.10.2016**
(21) Application number: 14812705.3
(22) Date of filing: 03.04.2014
(51) Int. Cl.: G06F 3/0484

(54) **METHOD FOR IMPLEMENTING FAST INPUT BY MOBILE DEVICE, AND MOBILE DEVICE**

(30) Priority: 12.12.2013 CN 201310683248
(71) Applicant: Huizhou TCL Mobile Communication Co., Ltd., Huizhou, Guangdong 516006 (CN)
(72) Inventor: YANG, Zhibing, Huizhou City Guangdong 516006 (CN)
(74) Representative: Moore, Graeme Patrick
(86) International application number: PCT/CN2014/074720
(87) International publication number: WO 2015/085686

(57) **Abstract**

A method for quick inputting in a mobile device and the mobile device are disclosed. The method for achieving quick inputting in a mobile device comprises: receiving an instruction of selecting a candidate item from a user by the mobile device; determining whether the candidate item selected is the object name with the predetermined mark according to the instruction, where the predetermined mark is used to label a category of the object, and the object name marked in advance is stored in a glossary of an input application in advance; and if the candidate item selected is the object name with the predetermined mark, then acquiring information corresponding to the object and inserting the information as an inserted content, where the information corresponding to the object is information acquired from other than the current input application of the mobile device. Thereby, the present disclosure allows for quick inserting of information from other applications than a current input application without having to exiting the current input application.

## Description

### FIELD OF THE INVENTION

The present disclosure relates to a method for quick inputting in a mobile device and the mobile device.

### BACKGROUND OF THE INVENTION

As mobile devices and 3G networks become much popular, functions of the mobile devices become also increasingly diversified and sophisticated. Correspondingly, things that can be dealt with by the mobile devices become increasingly more, for example, to chat, to send an E-mail, to edit a file, to browse a webpage and so on.

When users input or edit texts in a mobile device, often what inputted is not only text information, but may also be other information than texts, and it is possible that such information can only be obtained from other applications of the mobile device. For example, this will be the case when a telephone number of a contact, time information, picture information or music information and so on needs to be inputted.

Currently, text inputting is usually accomplished by use of an input application. When information from other than the input application needs to be inputted, very often the user has to exit the current input application and acquire other information from other applications than the current input application via a specific interface, and then insert the other information into the current input position. This often needs switching between different applications, which adversely affects the input efficiency of the user and causes inconveniences to the user. For example, when a user who is inputting texts needs to insert a telephone number of a contact person, the user has to exit the current input application and acquire the telephone number via a specific interface in the mobile device or to search for the telephone number from the telephone book and then manually input it, which is very inconvenient.

### SUMMARY OF THE INVENTION

The main technical problem to be solved by the present disclosure is to provide a method for quick inputting in a mobile device and the mobile device, which allow for quick inserting of information from other applications than a current input application without having to exiting the current input application.

To solve the aforesaid technical problem, a technical solution adopted by the present disclosure is to provide a method for quick inputting in a mobile device, which comprises: performing a matching operation according to a key character inputted by a user in an input application to obtain candidate items; determining whether there is an object name with a predetermined mark in the candidate items obtained through the matching operation; if there is the object name with the predetermined mark in the candidate items obtained through matching, then adjusting a priority level of the object name with the predetermined mark so that the object name with the predetermined mark is seen early when a first page of the candidate items is displayed; receiving an instruction of selecting a candidate item from the user by the mobile device; determining whether the candidate item selected is the object name with the predetermined mark according to the instruction, wherein the predetermined mark is used to label a category of the object, and the object name with the predetermined mark is stored in a glossary of the input application in advance; and if the candidate item selected is the object name with the predetermined mark, then determining the category of the object according to the predetermined mark of the object name, and according to the category of the object, acquiring information corresponding to the object from an application related to the category other than the current input application of the mobile device and inserting the information as an inserted content, wherein the information corresponding to the object is information acquired from other than the current input application of the mobile device.

Preferably, the information corresponding to the object is at least one of the object name, the object category and the object content.

Preferably, the method further comprises: appending predetermined marks to related object names in the mobile device respectively and adding the object names into the glossary of the input application in advance.

Preferably, the step of appending predetermined marks to related object names in the mobile device respectively and adding the object names into the glossary of the input application in advance comprises: acquiring the related object names from applications of the mobile device; and marking the related object names respectively according to their categories and adding the object names into the glossary of the input application.

Preferably, each of the related object names is at least one of a name of a contact person, a name of an audio/video, a place name, and a picture name.

To solve the aforesaid technical problem, another technical solution adopted by the present disclosure is to provide a method for quick inputting in a mobile device, which comprises: receiving an instruction of selecting a candidate item from a user by the mobile device; determining whether the candidate item selected is an object name with a predetermined mark according to the instruction, wherein the predetermined mark is used to label a category of the object, and the object name with the predetermined mark is stored in a glossary of an input application in advance; and if the candidate item selected is the object name with the predetermined mark, then acquiring information corresponding to the object and inserting the information as an inserted content, wherein the information corresponding to the object is information acquired from other than the current input application of the mobile device.

Preferably, the step of acquiring information corresponding to the object and inserting the information as an inserted content comprises: determining a category of the object according to the predetermined mark of the object name; and according to the category of the object, acquiring information corresponding to the object from an application related to the category other than the current input application of the mobile device and inserting the information as an inserted content.

Preferably, the information corresponding to the object is at least one of the object name, the object category and the object content.

Preferably, the method further comprises: appending predetermined marks to related object names in the mobile device respectively and adding the object names into the glossary of the input application in advance.

Preferably, the step of appending predetermined marks to related object names in the mobile device respectively and adding the object names into the glossary of the input application in advance comprises: acquiring the related object names from applications of the mobile device; and marking the related object names respectively according to their categories and adding the object names into the glossary of the input application.

Preferably, each of the related object names is at least one of a name of a contact person, a name of an audio/video, a place name, and a picture name.

Preferably, before the step of receiving an instruction of selecting a candidate item from the user, the method further comprises: performing a matching operation according to a key character inputted by the user in the input application to obtain candidate items; determining whether there is the object name with the predetermined mark in the candidate items obtained through the matching operation; and if there is the object name with the predetermined mark in the candidate items obtained through matching, then adjusting a priority level of the object name with the predetermined mark so that the object name with the predetermined mark is seen early when a first page of the candidate items is displayed.

To solve the aforesaid technical problem, a further technical solution adopted by the present disclosure is to provide a mobile device, which comprises a receiving module, a first determining module and an inserting module, wherein: the receiving module is configured to receive an instruction of selecting a candidate item from a user; the first determining module is configured to determine whether the candidate item selected is an object name with a predetermined mark according to the instruction, wherein the predetermined mark is used to label a category of the object, and the object name with the predetermined mark is stored in a glossary of an input application in advance; and the inserting module is configured to, if the candidate item selected is the object name with the predetermined mark, acquire information corresponding to the object and inserting the information as an inserted content, wherein the information corresponding to the object is information acquired from other than the current input application of the mobile device.

Preferably, the inserting module determines a category of the object according to the predetermined mark of the object name, and according to the category of the object, acquire information corresponding to the object from an application related to the category other than the current input application of the mobile terminal and inserting the information as an inserted content.

Preferably, the information corresponding to the object is at least one of the object name, the object category and the object content.

Preferably, the mobile terminal further comprises a prestoring module, which is configured to append predetermined marks to related object names in the mobile device respectively and add the object names into the glossary of the input application in advance.

Preferably, the prestoring module is configured to acquire the related object names from applications of the mobile device, and mark the related object names respectively according to their categories and add the object names into the glossary of the input application.

Preferably, each of the related object names is at least one of a name of a contact person, a name of an audio/video, a place name, and a picture name.

Preferably, the mobile device further comprises a matching module, a second determining module and an adjusting module, wherein: the matching module is configured to perform a matching operation according to a key character inputted by the user in the input application to obtain candidate items; the second determining module is configured to determine whether there is the object name with the predetermined mark in the candidate items obtained through the matching operation; and the adjusting module is configured to, if there is the object name with the predetermined mark in the candidate items obtained through matching, adjust a priority level of the object name with the predetermined mark so that the object name with the predetermined mark is seen early when a first page of the candidate items is displayed.

The present disclosure has the following benefits: as compared to the prior art, the present disclosure receives an instruction of selecting a candidate item from the user through a mobile device, determines whether the candidate item selected is an object name with a predetermined mark according to the instruction, and acquires information corresponding to the object and inserting the information as an inserted content if the candidate item selected is the object name with the predetermined mark, where the information corresponding to the object is information acquired from other than the current application of the mobile device. After the object name marked in advance is stored in a glossary of an input application in advance, the user can insert related information other than the current input application in a normal inputting manner when it is needed to insert information other than the current input application. Thereby, the inputting efficiency of the user can be greatly enhanced and a better experience in use can be provided to the user.

### BRIEF DESCRIPTION OF THE DRAWINGS

FIG. 1 is a flowchart diagram of an embodiment of a method for quick inputting in a mobile device according to the present disclosure;
FIG. 2 is a flowchart diagram of a process of appending predetermined marks to related object names in a mobile device respectively and adding the object names into a glossary of an input application in the embodiment of the method for achieving quick inputting in a mobile device according to the present disclosure;
FIG. 3 is a schematic structural view of an embodiment of a mobile device according to the present disclosure; and
FIG. 4 is a schematic structural view of another embodiment of a mobile device according to the present disclosure.

### DETAILED DESCRIPTION OF THE INVENTION

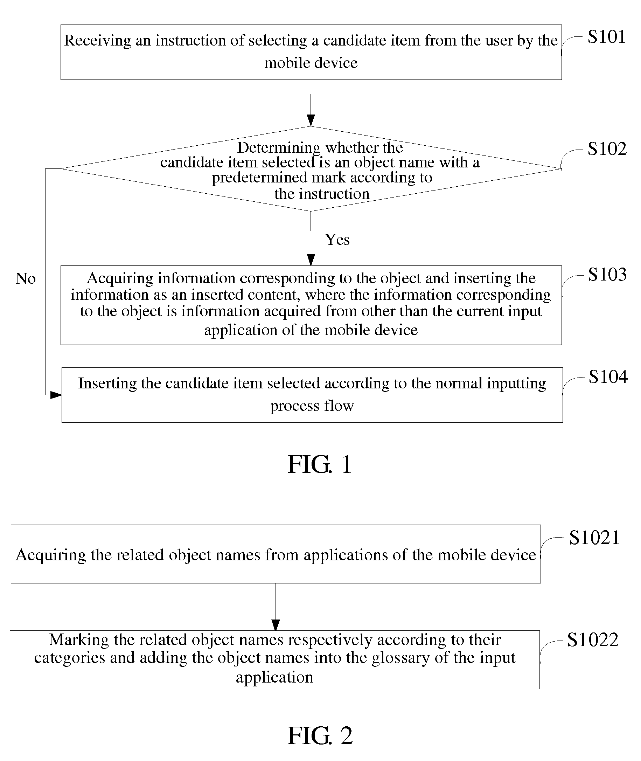

Referring to FIG. 1, there is shown a flowchart diagram of an embodiment of a method for quick inputting in a mobile device according to the present disclosure. The method for quick inputting in a mobile device of this embodiment comprises the following steps:
S101: receiving an instruction of selecting a candidate item from the user by the mobile device.

When performing an inputting operation through the input application, the user may input a key character through an input application. Then the input application performs a matching operation according to the key character and displays to the user candidate items that match the inputted key character, and the user selects words, phrases, sentences or the like that he or she needs to input from the candidate items displayed.

For selection of a candidate item, a quick selection of the candidate item may be accomplished through the sequence numbers appended in the front of the candidate items, or a selection of the candidate item may be accomplished in other ways such as by directly clicking the candidate item on a touch screen. The selection of the candidate item by the user is outputted to the mobile device in the form of an instruction, and the mobile device receives the instruction of selecting the candidate item from the user.

S102: determining whether the candidate item selected is an object name with a predetermined mark according to the instruction.

The user determines whether the candidate item selected is the object name with the predetermined mark according to the instruction of selecting a candidate item form the user. If the candidate item selected is the object name with the predetermined mark, then a step S103 is executed, and otherwise, a step S104 is executed.

Here, the object name with the predetermined mark is stored in a glossary of an input application in advance, and the predetermined mark is used to label a category of the labeled object. Therefore, in order to achieve the present disclosure, predetermined marks are appended to related object names in the mobile device respectively and the object names are added into the glossary of the input application in advance before the user performs the inputting operation through the input application. Each of the related object names may be at least one of a name of a contact person, a name of an audio/video, a place name, and a picture name.

The specific implementation process flow of the process of appending predetermined marks to related object names in the mobile device respectively and adding the object names into the glossary of the input application is shown in FIG. 2. As shown in FIG. 2, the step of appending predetermined marks to related object names in the mobile device respectively and adding the object names into the glossary of the input application comprises the following substeps:
S1021: acquiring the related object names from applications of the mobile device.

During the process of activating the system, the related object names are acquired from the applications of the mobile device; and these applications may be the telephone book, the navigation, the map, the audio/video player and etc. For example, a name of a contact person is acquired from the telephone book of the mobile device, a name of an audio/video is acquired from the audio/video player of the mobile terminal, a place name is acquired from the map, or a picture name is acquired from the photo album.

S1022: marking the related object names respectively according to their categories and adding the object names into the glossary of the input application.

The related object names may be acquired from different applications of the mobile device. For example, the name of the contact person is acquired from the telephone book, the name of the audio/video is acquired from the audio player and so on. Therefore, the categories of different object names may be labeled for purpose of differentiation. The object name and other candidate items can also be differentiated from each other.

The related object names acquired may be classified respectively according to their categories, marked with category labels respectively, and then added into the glossary of the input application. For example, the name of the contact person belongs to the contact information and may be labeled by a telephone icon; the place name belongs to the geographical location information and may be labeled by a location icon; and the music name belongs to the music information and may be labeled by a music note icon and so on. The object names that belong to different categories may be labeled by the user himself or herself as needed, and the present disclosure has no limitation on this.

After the object names are marked according to their categories, the categories (e.g., different categories such as the contact information, the geographical location, the audio/video and etc.) of the object names can be identified according to the marks thereof. Furthermore, when the object name and other candidate items are displayed together as candidate items, the object name and other candidate items can also be effectively differentiated from each other.

By adding the object name with the predetermined mark into the glossary of the input application, the object name with the predetermined mark can appear in the candidate items obtained through matching after the key character of the object name is inputted by the user.

S103: acquiring information corresponding to the object and inserting the information as an inserted content, where the information corresponding to the object is information acquired from other than the current input application of the mobile device.

If the candidate item selected is an object name with the predetermined mark, then information corresponding to the object is acquired and then inserted as the inserted content, where the information corresponding to the object is information acquired from other than the current input application of the mobile device. The information corresponding to the object may comprise at least one of the object name, the object category and the object content.

In the practical implementation, the category of the object may be determined according to the predetermined mark of the object name, and the information corresponding to the object is acquired from an application related to the category of the object other than the current input application of the mobile device according to the category of the object and then inserted as the inserted content. For example, if a name xxx of a contact person that has the telephone icon is selected by the user, then it is determined that the contact person information is to be inserted according to the telephone icon, and then the contact information of xxx is acquired from the telephone book of the mobile device and inserted into the current input position as the content. The content inserted may be in the form of the name xxx of the contact person+ the category (the contact person information)+ the content (the telephone number).

Through the aforesaid implementation, the object name can be acquired from an application of the mobile device and then added into the glossary of the input application in advance. Therefore, the user may input the key character of the object name to be inserted in a normal inputting manner when it is needed to insert information other than the current input application, and then the object name with the predetermined mark will appear in the candidate items obtained through matching by the input application according to the key character. If the object name with the predetermined mark is selected by the user, information related to the object is acquired from an related application and then inserted as the inserted content without having to exiting the current input application to acquire information from other than the current input application.

For example, the user only needs to input the key character of the name of the contact person when he or she needs to insert the telephone number of the contact person into the current input, and the name of the contact person with the mark will appear in the candidate items. Once the name of the contact person with the mark is selected by the user, then the background application will acquire the telephone number of the contact person from the telephone book and insert the telephone number into the current position as the inserted content. Of course, the inserted content may also be one or more of the name, the category and the telephone number of the contact person.

In a preferred implementation, if there is an object name with a predetermined mark in the candidate items that are obtained through the matching operation performed by the input application according to the key character, then a priority level of the object name with the predetermined mark is adjusted so that the object name with the predetermined mark can be seen early when a first page of the candidate items is displayed.

S104: inserting the candidate item selected according to a normal inputting process flow.

If the candidate item selected is not the object name with the predetermined mark, then the candidate item selected by the user is inserted into the current input position as the inserted content according to the normal inputting process flow.

As can be understood from the description of the aforesaid embodiments, in the method for quick inputting in a mobile device according to the present disclosure, an instruction of selecting a candidate item is received from the user by a mobile device, whether the candidate item selected is an object name with a predetermined mark is determined according to the instruction, information corresponding to the object is acquired and inserted as an inserted content if the candidate item selected is the object name with the predetermined mark, where the information corresponding to the object is information acquired from other than the current application of the mobile device. After the object name marked in advance is stored in a glossary of an input application in advance, the user can insert related information from other than the current input application in a normal inputting manner when he or she needs to insert information from other than the current input application. Thereby, the inputting efficiency of the user can be greatly enhanced and a better experience in use can be provided to the user.

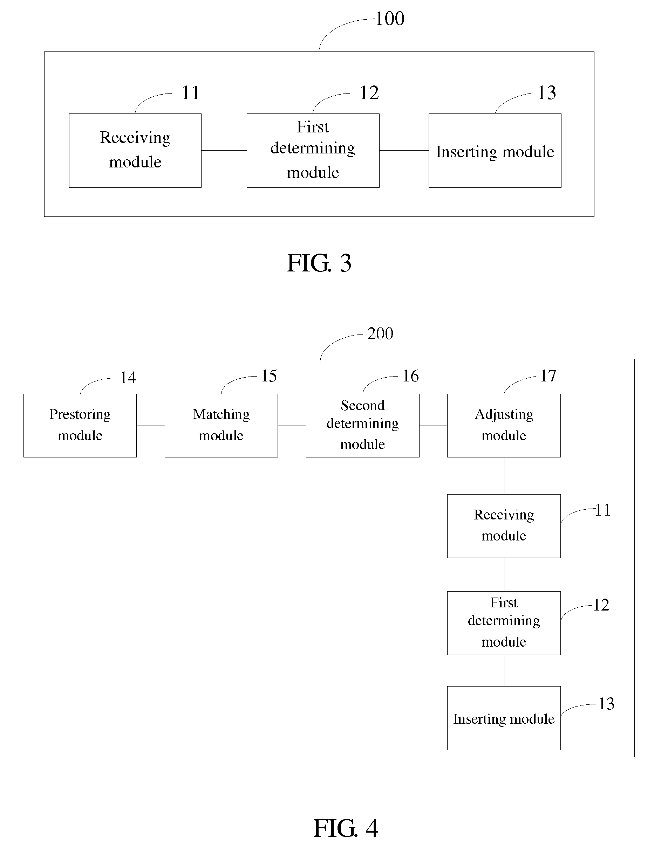

Referring to FIG. 3, there is shown a schematic structural view of an embodiment of a mobile device according to the present disclosure. A mobile device 100 of this embodiment comprises a receiving module 11, a first determining module 12 and an inserting module 13.

The receiving module 11 is configured to receive an instruction of selecting a candidate item from a user.

The user may input a key character through an input application when performing the inputting through the input application. Then the input application performs a matching operation according to the key character and displays to the user candidate items that match the key character inputted, and the user selects words, phrases, sentences or the like to be inputted by him or her from the candidate items displayed.

The selection of a candidate item by the user is outputted to the mobile device in the form of an instruction, and the mobile device receives the instruction of selecting a candidate item from the user through the receiving module 11.

The first determining module 12 is configured to determine whether the candidate item selected is an object name with a predetermined mark according to the instruction, where the predetermined mark is used to label a category of the object, and the object name with the predetermined mark is stored in a glossary of an input application in advance.

The first determining module 12 determines whether the candidate item selected is an object name with a predetermined mark according to the instruction of selecting a candidate item from the user.

Here, the object name with the predetermined mark is stored in the glossary of the input application in advance, and the predetermined mark is used to label the category of the object.

Referring to FIG. 4, there is shown a schematic structural view of another embodiment of a mobile device according to the present disclosure. In this embodiment, a mobile device 200 further comprises a prestoring module 14 in addition to the receiving module 11, the first determining module 12 and the inserting module 13. The prestoring module 14 is configured to, before the user performs the inputting through the inputting application, append predetermined marks to related object names in the mobile device respectively and add the object names into the glossary of the input application in advance. Each of the related object names may be a name of a contact person, a name of an audio/video, a place name, a picture name and etc.

The prestoring module 14 is configured to acquire the related object names from applications of the mobile device, and mark the related object names respectively according to their categories and add the object names into the glossary of the input application.

During the process of activating the system, the prestoring module 14 acquires the related object names from the applications of the mobile device; and these applications may be the telephone book, the navigation, the map, the audio/video player and etc. For example, a name of a contact person is acquired from the telephone book of the mobile device, a name of an audio/video is acquired from the audio/video player of the mobile terminal, a place name is acquired from the map, or a picture name is acquired from the photo album.

Related object names may be acquired from different applications of the mobile device. For example, the name of the contact person is acquired from the telephone book, the name of the audio/video is acquired from the audio player and so on. Therefore, the prestoring module 14 may label the categories of different object names to differentiate them from each other. The object name and other candidate items can also be differentiated from each other.

The related object names acquired may be classified respectively according to their categories, marked with category labels respectively, and then added into the glossary of the input application. For example, the name of the contact person belongs to the contact information and may be labeled by a telephone icon; the place name belongs to the geographical location information and may be labeled by a location icon; and the music name belongs to the music information and may be labeled by a music note icon and so on. The object names that belong to different categories may be labeled by the user himself or herself as needed, and the present disclosure has no limitation on this.

After the object names are marked according to their categories, the categories (e.g., different categories such as the contact information, the geographical location, the audio/video and etc.) of the object names may be identified according to the marks thereof. Furthermore, when the object name and other candidate items are displayed together as candidate items, the object name and other candidate items can also be effectively differentiated from each other.

By adding the object name with the predetermined mark into the glossary of the input application, the object name with the predetermined mark can appear in the candidate items obtained through matching after a key character of the object name is inputted by the user.

The inserting module 13 is configured to, if the candidate item selected is the object name with the predetermined mark, acquire information corresponding to the object and insert the information as an inserted content, where the information corresponding to the object is information acquired from other than the current input application of the mobile device.

If the candidate item selected is an object name with a predetermined mark, then the inserting module 13 acquires the information corresponding to the object and inserts the information as the inserted content, where the information corresponding to the object is the information acquired from other than the current input application of the mobile device. The information corresponding to the object may comprise at least one of the object name, the object category and the object content.

In the practical implementation, the inserting module 13 determines the category of the object according to the predetermined mark thereof, acquires the information corresponding to the object from an application related to the category of the object other than the current input application according to the category of the object and inserts the information into the current input position as the inserted content.

Through the aforesaid implementation, the object name can be acquired from an application of the mobile device and then added into the glossary of the input application in advance. Thus, when the user needs to insert information from other than the current input application, the user may input the key character of the object name to be inserted in a normal inputting manner. Then the object name with the predetermined mark will appear in the candidate items that are obtained through the matching operation performed by the input application according to the key character; and if the object name with the predetermined mark is selected by the user, information related to the object is acquired from an related application and then inserted as the inserted content without having to exiting the current input application to acquire information from other than the current input application.

For example, the user only needs to input the key character of the name of the contact person when he or she needs to insert the telephone number of the contact person into the current input, and then the name of the contact person with the mark will appear in the candidate items. Once the name of the contact person with the mark is selected by the user, then a background application will acquire the telephone number of the contact person from the telephone book and insert the telephone number into the current position as the inserted content. Of course, the inserted content may also be one or more of the name, the category and the telephone number of the contact person.

Referring still to FIG. 4, the mobile device in another embodiment of the present disclosure further comprises a matching module 15, a second determining module 16 and an adjusting module 17.

The matching module 15 is configured to perform a matching operation according to a key character inputted by the user in an input application to obtain candidate items.

The matching module 15 is configured to perform the matching operation according to the key character inputted by the user in the input application to obtain candidate items.

The second determining module 16 is configured to determine whether there is the object name with the predetermined mark in the candidate items obtained through the matching operation.

The second determining module 16 determines whether there is the object name with the predetermined mark in the candidate items obtained through the matching operation by the matching module according to the key character.

The adjusting module 17 is configured to, if there is the object name with the predetermined mark in the candidate items obtained through matching, adjust a priority level of the object name with the predetermined mark so that the object name with the predetermined mark can be seen early when a first page of the candidate items is displayed.

If there is the object name with the predetermined mark in the candidate items obtained through matching, then the priority level of the object name with the predetermined mark is adjusted so that the object name with the predetermined mark can be seen early when the first page of the candidate items is displayed.

As can be understood from the detailed description of the aforesaid embodiments, in the present disclosure, an instruction of selecting a candidate item is received from the user by a mobile device, whether the candidate item selected is an object name with a predetermined mark is determined according to the instruction, information corresponding to the object is acquired and inserted as an inserted content if the candidate item selected is the object name with the predetermined mark, where the information corresponding to the object is information acquired from other than the current application of the mobile device. After the object name marked in advance is stored in a glossary of an input application in advance, the user can insert related information from other than the current input application in a normal inputting manner when he or she needs to insert information from other than the current input application. Thereby, the inputting efficiency of the user can be greatly enhanced and a better experience in use can be provided to the user.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A method for quick inputting in a mobile device, comprising:
performing a matching operation according to a key character inputted by a user in an input application to obtain candidate items;
determining whether there is an object name with a predetermined mark in the candidate items obtained through the matching operation;
if there is the object name with the predetermined mark in the candidate items obtained through matching, then adjusting a priority level of the object name with the predetermined mark so that the object name with the predetermined mark is seen early when a first page of the candidate items is displayed;
receiving an instruction of selecting a candidate item from the user by the mobile device;
determining whether the candidate item selected is the object name with the predetermined mark according to the instruction, wherein the predetermined mark is used to label a category of the object, and the object name with the predetermined mark is stored in a glossary of the input application in advance; and
if the candidate item selected is the object name with the predetermined mark, then determining the category of the object according to the predetermined mark of the object name, and according to the category of the object, acquiring information corresponding to the object from an application related to the category other than the current input application of the mobile terminal and inserting the information as an inserted content, wherein the information corresponding to the object is information acquired from other than the current input application of the mobile device.

2. The method of claim 1, wherein the information corresponding to the object is at least one of the object name, the object category and the object content.

3. The method of claim 1, further comprising: appending predetermined marks to related object names in the mobile device respectively and adding the object names into the glossary of the input application in advance.

4. The method of claim 3, wherein the step of appending predetermined marks to related object names in the mobile device respectively and adding the object names into the glossary of the input application in advance, comprises:
acquiring the related object names from applications of the mobile device; and
marking the related object names respectively according to their categories and adding the object names into the glossary of the input application.

5. The method of claim 3, wherein each of the related object names is at least one of a name of a contact person, a name of an audio/video, a place name, and a picture name.

6. A method for quick inputting in a mobile device, comprising:
receiving an instruction of selecting a candidate item from a user by the mobile device;
determining whether the candidate item selected is an object name with a predetermined mark according to the instruction, wherein the predetermined mark is used to label a category of the object, and the object name with the predetermined mark is stored in a glossary of an input application in advance; and
if the candidate item selected is the object name with the predetermined mark, then acquiring information corresponding to the object and inserting the information as an inserted content, wherein the information corresponding to the object is information acquired from other than the current input application of the mobile device.

7. The method of claim 6, wherein the step of acquiring information corresponding to the object and inserting the information as an inserted content comprises:
determining a category of the object according to the predetermined mark of the object name; and
according to the category of the object, acquiring information corresponding to the object from an application related to the category other than the current input application and inserting the information as an inserted content.

8. The method of claim 1, wherein the information corresponding to the object is at least one of the object name, the object category and the object content.

9. The method of claim 1, further comprising: appending predetermined marks to related object names in the mobile device respectively and adding the object names into the glossary of the input application in advance.

10. The method of claim 9, wherein the step of appending predetermined marks to related object names in the mobile device respectively and adding the object names into the glossary of the input application in advance, comprises:
acquiring the related object names from applications of the mobile device; and
marking the related object names respectively according to their categories and adding the object names into the glossary of the input application.

11. The method of claim 9, wherein each of the related object names is at least one of a name of a contact person, a name of an audio/video, a place name, and a picture name.

12. The method of claim 6, wherein before the step of receiving an instruction of selecting a candidate item from the user, the method further comprises:
performing a matching operation according to a key character inputted by the user in the input application to obtain candidate items;
determining whether there is the object name with the predetermined mark in the candidate items obtained through the matching operation; and
if there is the object name with the predetermined mark in the candidate items obtained through matching, then adjusting a priority level of the object name with the predetermined mark so that the object name with the predetermined mark is seen early when a first page of the candidate items is displayed.

13. A mobile device, comprising a receiving module, a first determining module and an inserting module, wherein:
the receiving module is configured to receive an instruction of selecting a candidate item from a user;
the first determining module is configured to determine whether the candidate item selected is an object name with a predetermined mark according to the instruction, wherein the predetermined mark is used to label a category of the object, and the object name with the predetermined mark is stored in a glossary of an input application in advance; and
the inserting module is configured to, if the candidate item selected is the object name with the predetermined mark, acquire information corresponding to the object and insert the information as an inserted content, wherein the information corresponding to the object is information acquired from other than the current input application of the mobile device.

14. The mobile device of claim 13, wherein the inserting module determines a category of the object according to the predetermined mark of the object name, and according to the category of the object, acquire information corresponding to the object from an application related to the category other than the current input application of the mobile terminal and inserting the information as an inserted content.

15. The mobile device of claim 13, wherein the information corresponding to the object is at least one of the object name, the object category and the object content.

16. The mobile device of claim 13, further comprising a prestoring module, which is configured to append predetermined marks to related object names in the mobile device respectively and add the object names into the glossary of the input application in advance.

17. The mobile device of claim 16, wherein the prestoring module is configured to acquire the related object names from applications of the mobile device, and mark the related object names respectively according to their categories and add the object names into the glossary of the input application.

18. The mobile device of claim 16, wherein each of the related object names is at least one of a name of a contact person, a name of an audio/video, a place name, and a picture name.

19. The mobile device of claim 13, further comprising a matching module, a second determining module and an adjusting module, wherein:
the matching module is configured to perform a matching operation according to a key character inputted by the user in the input application to obtain candidate items;
the second determining module is configured to determine whether there is the object name with the predetermined mark in the candidate items obtained through the matching operation; and
the adjusting module is configured to, if there is the object name with the predetermined mark in the candidate items obtained through matching, adjust a priority level of the object name with the predetermined mark so that the object name with the predetermined mark is seen early when a first page of the candidate items is displayed.
